Europäisches Patentamt

European Patent Office

Office européen des brevets

(11) Veröffentlichungsnummer : **0 100 422 B1**

(12) # EUROPÄISCHE PATENTSCHRIFT

(45) Veröffentlichungstag der Patentschrift :
05.03.86

(21) Anmeldenummer : 83106017.3

(22) Anmeldetag : 21.06.83

(51) Int. Cl.⁴ : **B 29 C 45/44**

(54) **Spritzform.**

(30) Priorität : **31.07.82 DE 3228748**

(43) Veröffentlichungstag der Anmeldung :
**15.02.84 Patentblatt 84/07**

(45) Bekanntmachung des Hinweises auf die Patenterteilung : **05.03.86 Patentblatt 86/10**

(84) Benannte Vertragsstaaten :
**AT BE CH DE FR GB IT LI NL SE**

(56) Entgegenhaltungen :
**DE-A- 2 832 177**
**DE-A- 3 043 275**

(73) Patentinhaber : **TRW Ehrenreich GmbH & Co. KG**
**Hansa-Allee 190**
**D-4000 Düsseldorf 11 (DE)**

(72) Erfinder : **Busch, Peter**
**Faunastrasse 7**
**D-4630 Bochum (DE)**
Erfinder : **Barbet, Karl-Heinz**
**Novalis-Strasse 4**
**D-4052 Korschenbroich (DE)**

(74) Vertreter : **Patentanwälte Dipl.-Ing. Alex Stenger**
**Dipl.-Ing. Wolfram Watzke Dipl.-Ing. Heinz J. Ring**
**Kaiser-Friedrich-Ring 70**
**D-4000 Düsseldorf 11 (DE)**

## Beschreibung

Gegenstand der Erfindung ist eine Spritzform zum Herstellen von aus elastischem Material bestehenden, mit Hinterschneidungen versehenen Dichtungselementen, insbesondere Dichtungsbälgen für Gelenke, beispielsweise Kugelgelenke an Fahrzeugen, mit die äußere Kontur bildenden, in Längsrichtung des Dichtungselementes mittig geteilten Backen und einem die innere Kontur bildenden Kernstempel, der in einen relativ zueinander beweglichen oberen und unteren Kernstempelteil geteilt ist und von dem das Dichtungselement nach Öffnen der Backen entfernt wird.

Eine derartige Spritzform ist aus der DE-OS 28 32 177 bekannt. Bei dieser bekannten Spritzform soll das mit den Hinterschneidungen versehene Dichtungselement nach dem Öffnen der mittig geteilten Backen mit dem beweglichen, oberen Kernstempelteil vom stationären unteren Kernstempelteil abgezogen werden, wobei gleichzeitig Druckluft durch die Trennfuge zwischen dem oberen und unteren Kernstempelteil eingeblasen wird. Da sich diese Trennfuge zwischen dem oberen und unteren Kernstempelteil unmittelbar unter einem Ende des Dichtungselementes befindet, ist davon auszugehen, daß die Druckluft sich den Weg des geringsten Widerstandes sucht und das Dichtungselement nicht von dem stationären unteren Kernstempelteil loslöst. Das maschinelle Entformen mit dieser bekannten Spritzform kann deshalb nur dann gelingen, wenn der untere Kernstempelteil mit einem Trennmittel, beispielsweise Silikon, besprüht worden ist. Da dieses Trennmittel häufig zu Trennmitteleinschlüssen im Material des Dichtungselementes führt, ist es bei der bekannten Spritzform erforderlich, sämtliche Dichtungselemente einer sorgfältigen Prüfung zu unterziehen. Insbesondere bei komplizierteren Formen der Dichtungselemente mit größeren Hinterschneidungen, wie dies bei mehrfaltigen Dichtungsbälgen der Fall ist, ergibt sich ein Ausschuß von bis zu 50 % der Produktion.

Ausgehend von diesem Stand der Technik liegt der Erfindung die Aufgabe zugrunde, eine Spritzform zu schaffen, mit welcher mit Hinterschneidungen versehene Dichtungselemente preiswert und unter erheblicher Verringerung des Ausschusses hergestellt werden können, und zwar ohne die Verwendung von Trennmittel und ohne eine manuelle Entnahme.

Zur Lösung dieser Aufgabe wird eine gattungsgemäße Spritzform vorgeschlagen, bei der die Backen im Bereich zwischen der im Durchmesser kleinsten inneren und der im Durchmesser kleinsten äußeren Hinterschneidung in Querrichtung in ein oberes und ein unteres Backenpaar geteilt sind, die unabhängig voneinander beweglich sind, und bei der der untere Kernstempelteil in einer Auswerferformhülse geführt ist, die relativ zum unteren Kernstempelteil beweglich ist und mit ihrer Stirnfläche einen Teil der Außenkontur der Stirnfläche des Dichtungselementes formt.

Mit einer nach dieser technischen Lehre ausgebildeten Spritzform können die durch das Zusammenwirken der beiden Backenpaare, der beiden Kernstempelteile und der Auswerferformhülse erzeugten Dichtungselemente auf einfache Weise automatisch ausgeworfen werden, indem nach dem Öffnen des oberen Backenpaares der obere Kernstempelteil aus dem Dichtungselement herausgezogen wird, wobei das Dichtungselement durch das untere Backenpaar in Verbindung mit dem unteren Kernstempelteil und der Auswerferformhülse in der Spritzform festgehalten wird. Nach dem anschließenden Öffnen des unteren Backenpaares und einer Relativbewegung zwischen dem unteren Kernstempelteil und der Auswerferformhülse kann dann automatisch das endgültige Entformen des Dichtungselementes erfolgen, ohne daß es dazu eines manuellen Eingriffes bedarf. Bei dieser Entformungstechnik ist es auch nicht mehr erforderlich, ein Trennmittel zu verwenden. Außerdem werden Überlastungen des Dichtungselementes beim Entformen vermieden, so daß praktisch kein Ausschuß mehr entsteht. Die Überprüfung der hergestellten und ausgeformten Dichtungselemente kann sich auf Stichproben beschränken.

Ein weiterer wichtiger Vorteil der erfindungsgemäß ausgebildeten Spritzform ist schließlich auch darin zu sehen, daß durch das automatische Entformen der Dichtungselemente ohne die Verwendung von Trennmitteln eine Verringerung der Belastung des Dichtungselementes mit sich bringt und damit die Verarbeitung weicherer Materialien ermöglicht, beispielsweise von weicheren Polyurethanen oder Polyamid-Elastomeren. Neben einer wirtschaftlicheren Fertigung durch Verringerung des Ausschusses und der damit verbundenen Kontrollen schafft die Erfindung somit auch eine beachtliche Erweiterung der für die Herstellung derartiger Dichtungselemente verwendbaren Materialien.

In den Zeichnungen ist ein Ausführungsbeispiel der erfindungsgemäßen Spritzvorrichtung schematisch in verschiedenen Arbeitsstellungen dargestellt worden. In den Zeichnungen zeigen :

Figur 1 eine Spritzvorrichtung während des Spritzvorganges teilweise geschnitten in Seitenansicht ;

Figur 2 dieselbe Spritzvorrichtung nach dem Öffnen des oberen Backenpaares ;

Figur 3 dieselbe Spritzvorrichtung während des Herausziehens des oberen Kernstempelteiles und

Figur 4 dieselbe Spritzvorrichtung in vollständig geöffnetem Zustand.

Das dargestellte Ausführungsbeispiel zeigt eine Formenaufspannplatte 1, auf der eine Grundplatte 2 befestigt ist. An dieser Grundplatte 2 sind sowohl ein unteres Backenpaar 3 als auch ein oberes Backenpaar 4 beweglich geführt, die mittig geteilt sind und unabhängig voneinander geöffnet und geschlossen werden können. An der Grundplatte 2 sind weiterhin eine Auswerferformhülse 5 und ein unterer Kernstempelteil 6 angeordnet, die relativ zueinander beweglich sind. Beim Ausführungsbeispiel steht der untere Kern-stempelteil fest, wogegen die Auswerferform-hülse 5 in Längsrichtung gegenüber dem Kernstempelteil 6 und damit gegenüber der Grundplatte 2 verschiebbar ist.

Mittels zweier Führungsstangen 7 ist an der Grundplatte 2 und damit an der Formenaufspannplatte 1 eine Deckplatte 8 geführt, die mit einer Tragplatte 9 versehen ist. Diese Tragplatte 9 dient ihrerseits der Lagerung und Führung eines oberen Kernstempelteils 10, der in seiner Längsrichtung gegenüber der Tragplatte 9 verschiebbar ist. Um die Deckplatte 8 mit den an ihr angeordneten Teilen auch bei vollständig geöffneter Spritzform relativ zur Formenaufspannplatte 1 zu führen, sind weitere Führungsmittel vorhanden, die jedoch in der Zeichnung der besseren Übersichtlichkeit wegen weggelassen wurden.

Durch die Formgebung der mittig geteilten unteren und oberen Backenpaare 3 und 4 wird die äußere Kontur auf der Mantenfläche des beispielsweise durch einen Spritzvorgang aus elastischem Kunststoff herzustellenden Dichtungselements gebildet. Als Beispiel für ein derartiges Dichtungselement ist ein Doppelfaltenbalg gezeichnet, wie er für Kugelgelenke im Fahrzeugbau Verwendung findet. Wie insbesondere die Fig. 4 erkennen läßt, weist das obere Backenpaar 4 zur Herstellung dieser äußeren Kontur zwei Vorsprünge V1 und V2 und das untere Backenpaar 3 einen Vorsprung V3 auf. Diese Vorsprünge V1, V2 und V3 haben äußere Hinterschneidungen H1 bzw. H2 bzw. H3 an dem herzustellenden Dichtungselement D zur Folge. Um eine gleichmäßige Wandstärke des Dichtungselements D zu erzielen, ist auch der obere Kernstempelteil 10 mit ringförmigen Vorsprüngen V4 und V5 versehen, die ihrerseits Hinterschneidungen H4 bzw. H5 bezüglich der Innenkontur des Dichtungselements D zur Folge haben.

Die innere Kontur des Dichtungselements D wird nicht nur durch den oberen Kernstempelteil 10, sondern auch durch den unteren Kernstempelteil 6 gebildet, der mit mehreren Rippen zur Bildung der kleineren axialen Öffnung des Dichtungselements D versehen ist. Schließlich bildet der obere Kernstempelteil 10 den stirnseitigen Abschluß am Rand der größeren axialen Öffnung des Dichtungselements D. Der gegenü-berliegende stirnseitige Abschluß des Dichtungs-elements D wird außer vom unteren Kernstempelteil 6 in einem äußeren Ringbereich von der Stirnfläche der Auswerferformhülse 5 gebildet.

Der Anschluß des durch die Teile 3, 4, 5, 6 und 10 gebildeten Hohlraumes zum Spritzen des Dichtungselements D erfolgt durch ein Anschlußstück 11, das oberhalb des oberen Backenpaares 4 an der Tragplatte 9 angeordnet ist, so daß das Spritzgut im Randbereich der größeren axialen Öffnung des Dichtungselements D in den Hohlraum der Spritzform eingeführt wird.

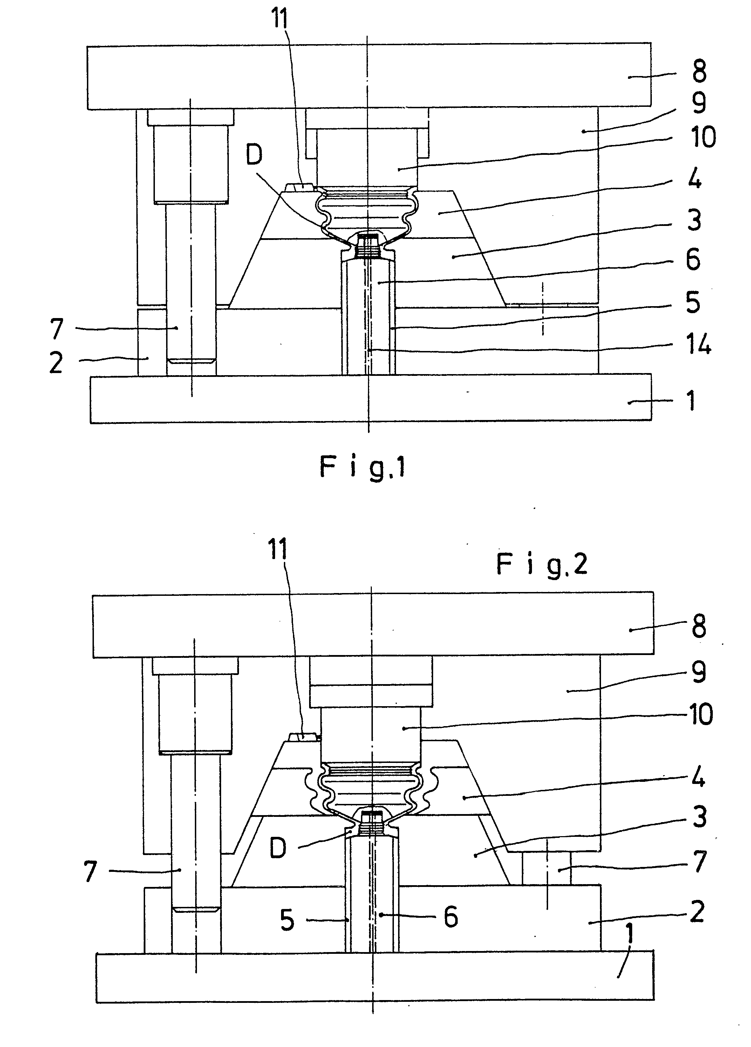

Um eine zuverlässige Führung des unteren Kernstempelteils 6 am oberen Kernstempelteil 10 während des Spritzvorganges zu erzielen, ist der untere Kernstempelteil 6 mit einem Zapfen 12 versehen, der in eine entsprechende Vertiefung 13 des oberen Kernstempelteils 10 eingreift, wenn die Vorrichtung geschlossen ist. Der Zapfen 12 und die Vertiefung 13 sind am besten in Fig. 4 zu erkennen. Ihr Zusammenwirken ergibt sich am deutlichsten aus Fig. 1.

Die Fig. 1 zeigt auch die Stellung der Einzelteile der Spritzform während des Spritzvorganges. Sobald dieser Spritzvorgang beendet ist und das erzeugte Dichtungselement D sich in der notwendigen Weise verfestigt hat, wird als erster Schritt zum Entformen des Dichtungselements D gemäß Fig. 2 die Deckplatte 8 geringfügig angehoben. Hierbei verbleibt der obere Kernstempelteil 10 in seiner Stellung, wogegen das obere Backenpaar 4 geöffnet wird.

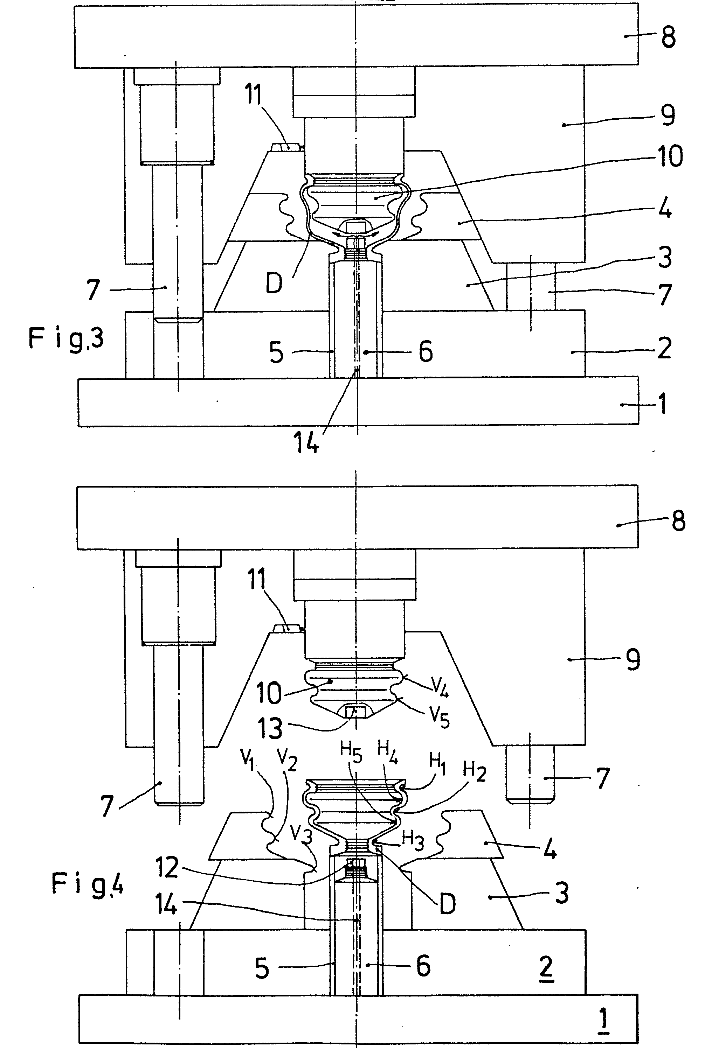

Anschließend wird gemäß Fig. 3 durch eine Druckluftbohrung 14, die durch den unteren Kernstempelteil 6 bis in die Trennebene zwischen oberem und unterem Kernstempelteil 10 bzw. 6 reicht, Druckluft zugeführt, um das Dichtungselement D gezielt aufzuweiten, wie dies ebenfalls in Fig. 3 dargestellt ist. Hierbei wird durch eine weitere Bewegung der Deckplatte 8 der obere Kernstempelteil 10 geringfüfig vom unteren Kernstempelteil 6 abgehoben.

Bei diesem Anheben des oberen Kernstempelteils 10 bleibt das Dichtungselement D zwischen dem in der Schließstellung verharrenden unteren Backenpaar 3 sowie dem unteren Kernstempelteil 6 und der Auswerferformhülse 5 eingespannt. Auch bei einem vollständigen Herausziehen des oberen Kernstempelteiles 10 aus dem Dichtungselement D bleibt diese Einspannung erhalten. Erst wenn der obere Kernstempelteil 10 das Dichtungselement D vollständig verlassen hat, wie dies Fig. 4 zeigt, wird das untere Backenpaar 3 geöffnet. Anschließend führt die Auswerferformhülse 5 eine Relativbewegung zum unteren Kernstempelteil 6 durch, so daß das Dichtungselement D mit dem Hauptteil seiner Stirnfläche vom unteren Kernstempelteil 6 abgehoben wird. In dieser Stellung kann das Dichtungselement D ohne Schwierigkeiten aus der vollständig geöffneten Spritzform selbsttätig ausgeworden werden.

Bei dem voranstehend geschilderten Entformungsvorgang ist weder die Verwendung eines Trennmittels, wie beispielsweise Silikon, notwendig, noch treten unzulässige Belastungen des Dichtungselements D auf, die zu bleibenden Verformungen führen könnten. Da das Dichtungselement D schließlich auch im Bereich seiner beiden axialen Öffnungen die endgültige Form besitzt, entfällt jegliche Nacharbeit.

Sobald das Dichtungselement D die geöffnete Spritzform verlassen hat, werden deren Teile in die in Fig. 1 dargestellte Lage zurückbewegt. Die Spritzform steht anschließend für einen neuen Spritzvorgang zur Verfügung.

Durch die Trennung der in Längsrichtung des Dichtungselements D mittig geteilten Backen in ein unteres und oberes Backenpaar 3 bzw. 4 und durch die Verwendung einer Auswerferformhülse 5 läßt sich das Dichtungselement D in der voranstehend beschriebenen Weise automatisch entformen. Die Trennung zwischen dem unteren Backenpaar 3 und dem oberen Backenpaar 4 erfolgt hierbei in einem Bereich, der zwischen der im Durchmesser kleinsten inneren Hinterschneidung H5 und der im Durchmesser kleinsten äußeren Hinterschneidung H3 liegt. Unabhängig von der Form des jeweiligen Dichtungselements D ist es durch eine Trennung der Backenpaare 3 und 4 in diesem Bereich möglich, nach dem Öffnen des oberen Backenpaares 4 das Dichtungselement D mittels des geschlossenen unteren Backenpaares 3 festzuhalten, während der obere Kernstempelteil 10 aus dem Dichtungselement D herausgezogen wird.

Bezugszeichenliste :

    1  Formenaufspannplatte
    2  Grundplatte
    3  unteres Backenpaar
    4  oberes Backenpaar
    5  Auswerferformhülse
    6  unteres Kernstempelteil
    7  Führungsstange
    8  Deckplatte
    9  Tragplatte
    10  oberer Kernstempelteil
    11  Anschlußstück
    12  Zapfen
    13  Vertiefung
    14  Druckluftbohrung
    D  Dichtungselement
    H1 ⎫
    H2 ⎪
    H3 ⎬ Hinterschneidung
    H4 ⎪
    H5 ⎭
    V1 ⎫
    V2 ⎪
    V3 ⎬ Vorsprung
    V4 ⎪
    V5 ⎭

## Patentanspruch

Spritzform zum Herstellen von aus elastischem Material bestehenden, mit Hinterschneidungen versehenen Dichtungselementen (D), insbesondere Dichtungsbälgen für Gelenke, beispielsweise Kugelgelenke an Fahrzeugen, mit die äußere Kontur bildenden, in Längsrichtung des Dichtungselementes (D) mittig geteilten Backen und einem die innere Kontur bildenden Kernstempel, der in einen relativ zueinander beweglichen oberen (10) und unteren (6) Kernstempelteil geteilt ist und von dem das Dichtungselement (D) nach Öffnen der Backen entfernt wird, dadurch gekennzeichnet, daß die Backen im Bereich zwischen der im Durchmesser kleinsten inneren und der im Durchmesser kleinsten äußeren Hinterschneidung (H5 bzw. H3) in Querrichtung in ein oberes und ein unteres Backenpaar (4 bzw. 3) geteilt sind, die unabhängig voneinander beweglich sind, und daß der untere Kernstempelteil (6) in einer Auswerferformhülse (5) geführt ist, die relativ zum unteren Kernstempelteil (6) beweglich ist und mit ihrer Stirnfläche einen Teil der Außenkontur der Stirnfläche des Dichtungselementes (D) formt.

## Claim

Injection mould for the production of sealing members (D) provided with reverse cuts, consisting of elastic material, especially sealing bellows for joints, for example ball joints on vehicles, with jaws, divided in the middle in the longitudinal direction of the sealing element (D), forming the outer contour, and a core temple, which is divided into an upper (10) and a lower (6) core temple part movable relative to one another, forming the inner contour, and the sealing element (D) is separable from the core temple after opening of the jaws, characterised in that, the jaws are divided in the region between the reverse cut (H5 or H3) of smallest inner diameter and that of smallest outer diameter in cross section into an upper and a lower jaw pair (4 or 3), which are movable independently from one another, and in that the lower core temple part (6) is guided in an ejector shaped bush (5), which is movable relative to the lower core temple part (6) and with its front face forms a part of the outer contour of the front face of the sealing element (D).

## Revendication

Moule à injection pour la fabrication d'éléments d'étanchéité (D) constitué de matière élastique et pourvu de contre-dépouilles, en particulier de soufflets d'étanchéité pour articulation, par exemple des joints à rotule sur des véhicules, comportant des coquilles formant le contour extérieur et divisées par le milieu suivant la direction longitudinale de l'élément d'étanchéité (D) et un poinçon central formant le contour intérieur, qui est divisé en une partie supérieure (10) et une partie inférieure (6) mobiles relativement par rapport à l'autre et à partir duquel l'élément d'étanchéité (D) est enlevé après l'ouverture des joues, caractérisé en ce que les coquilles sont partagées selon la direction transversale dans la zone se trouvant entre la contre-dépouille (H5) intérieure de plus faible diamètre et la contre-dépouille (H3) extérieure de plus faible diamètre en une paire supérieure (4) et une paire inférieure (3) de coquilles qui sont mobiles indépendamment l'une de l'autre et en ce que la partie inférieure (6) de poinçon central est guidée dans un manchon éjecteur (5) qui est mobile relativement à la partie inférieure (6) de poinçon central et qui forme par sa surface frontale une partie du contour extérieur de la surface frontale de l'élément d'étanchéité (D).

F i g.1

F i g.2

Fig.3

Fig.4